(19) Europäisches Patentamt
European Patent Office
Office européen des brevets

(11) EP 0 604 369 B1

(12) EUROPEAN PATENT SPECIFICATION

(45) Date of publication and mention of the grant of the patent:
**25.08.1999 Bulletin 1999/34**

(51) Int Cl.[6]: **C08F 246/00**, G02B 1/04

(21) Application number: **93810881.8**

(22) Date of filing: **14.12.1993**

# (54) Deposit-resistant contact lenses

Niederschlagsbeständige Kontaktlinsen

Lentilles de contact empêchant les depôts

(84) Designated Contracting States:
**AT BE CH DE DK ES FR GB GR IE IT LI LU NL PT SE**

(30) Priority: **23.12.1992 US 996201**

(43) Date of publication of application:
**29.06.1994 Bulletin 1994/26**

(73) Proprietors:
- **Novartis AG**
  **4058 Basel (CH)**
  Designated Contracting States:
  **BE CH DE DK ES FR GB GR IE IT LI LU NL PT SE**
- **Novartis-Erfindungen Verwaltungsgesellschaft m.b.H.**
  **1235 Wien (AT)**
  Designated Contracting States:
  **AT**

(72) Inventors:
- **Robertson, James Richard**
  **Alpharetta GA 30201 (US)**
- **Terry, Wilson Leonard Jr.**
  **Alpharetta GA 30202 (US)**

(56) References cited:
**WO-A-83/01002**
**DE-A- 2 615 128**
**FR-A- 2 342 510**
**US-A- 3 951 528**
**US-A- 3 965 063**
**US-A- 4 218 554**
**US-A- 4 625 009**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 604 369 B1

## Description

The instant invention pertains to hydrophilic copolymers having good oxygen permeability in combination with antimicrobial properties which are useful in the preparation of ophthalmic acceptable devices, such as contact lenses or intraocular lenses, which are resistant to deposits.

The prior art is replete with references to hydrophilic polymers and copolymers tailored to meet the increasingly stringent demands of the soft contact lens field. Such demands call for contact lens to have toughness, high oxygen permeability, flexibity, clarity, ease of care, resistance to tearing, permanence, non-allergenicity, resistance to proteinaceous deposition and the like.

FR 2 342 510 describes a contact lens, having a water uptake in the range of 20 - 45% and a tensile strength of at least 500 g/mm$^2$, consisting of a copolymer on the basis of alkyleneglycol monomethacrylate. A higher water uptake is not recommended, since such will facilitate the absorption of proteinaceous deposits.

U.S. Patent No. 4,038,264 describes hydrophilic polymers based on 2-hydroxyethyl methacrylate (HEMA) copolymerized with a ω-lower alkoxy-(lower alkyleneoxy)$_{2\text{-}6}$lower alkyl methacrylate, preferably ω-methoxy-di(ethyleneoxy)ethyl methacrylate, which exhibit enhanced oxygen permeability.

There are publications which indicate that hydrophilic copolymers with long poly(ethylene oxide) chains possess good antithrombogenic properties. S. Nagaoka et al., Biomaterials, 11, 120 (1990) teach that polymers coated by such materials significantly suppress the absorption of plasma proteins and adhesion of blood platelets. This conclusion is also confirmed by D. K. Han et al., J. Biomed. Mater. Res., 25, 561 (1991).

U.S. Patent No. 4,482,680 describes polymers containing quaternary ammonium groups which exhibit antimicrobial activity. These polymers are derived from poly(chloromethylstyrene) by reaction with a tertiary amine to form the corresponding poly(quaternary-ammoniummethyl-styrene). These polymers have good antimicrobial properties and are touted as perservatives for ophthalmic solutions.

The instant invention pertains to contact lenses which embody the best features of the soft contact lens technology by possessing good toughness, high oxygen permeability, excellent clarity, etc, but which also provides contact lenses resistant to proteinaceous and other deposits. Contact lenses which exhibit less protein absorption generally show less discoloration, better wettability and comfort, and generally a longer use-life.

The problem of protein accumulation on disposable extended wear lenses is discussed in a general article by S. T. Lin et al., CLAO (Contact Lens Assoc Opthalmol) J., 17, 44 (1991). Contact lens deposits consist primarily of proteins, mucus and lipids from the tears, together with minor quantities of extraneous substances. Although diverse tear components may contribute to contact lens coatings, proteins are of special interest due to their assumed potential for producing immunological reaction such as giant papillary conjunctivitis (GPC), superior limbic keratoconjunctivitis and vascular responses. Six tear protein groups have been identified in tears and on contact lenses, including lysozyme, albumin, PMFA, IgG, IgA, protein G and lactoferrin.

Much of the protein that accumulates on contact lenses may be removed by surfactant and enzymatic cleaners, but attempts to prevent buildup of all lens deposits have been without success. Recently, disposable extended wear lenses have been viewed as an alternative approach to minimize proteins and deposits on extended wear lenses. In addition to putative advantages such as improved sterility and minimal lens handling by patients, it has been claimed that frequent lens replacements in the form of disposable extended wear lenses reduces the accumulation of lens deposits to a level which will alleviate clinical symptoms and perhaps reduce the immunological reactions to lens deposits.

It is clear from this general discussion that deposits, especially proteinaceous deposits, remain a serious problem in the contact lens field.

The instant invention relates to a copolymer, having good oxygen permeability, good antimicrobial properties and good resistance to proteinaceous deposition, which comprises the copolymerization product of

(a) 65 to 97.9 % by weight, based on the total copolymer, of a hydrophilic monomer selected from the group consisting of the hydroxy substituted lower alkyl acrylates or methacrylates, acrylamide, methacrylamide, N-lower alkylacrylamide or methacrylamide, N,N-di-lower alkylacrylamide or methacrylamide, ethoxylated acrylates or methacrylates, hydroxy substituted lower alkyl acrylamide or methacrylamide, hydroxy substituted lower alkyl vinyl ethers, sodium ethylenesulfonate, sodium styrenesulfonate, 2-acrylamido-2-methylpropanesulfonic acid, N-vinyl-2-pyrrolidone, N-vinylsuccinimide, N-vinylpyrrole, 2-and 4-vinylpyridine, acrylic acid, methacrylic acid, amino-, lower alkylamino- or lower dialkylamino- substituted lower alkyl acrylates or methacrylates, allyl alcohol and mixtures thereof,

(b) 20 to 1 % by weight, based on the total copolymer, of a monomer of formula I, II or III

$$CH_2{=}C(R)\text{-}COO\text{-}T\text{-}[OCH_2CH(G)]_nOH \qquad (I)$$

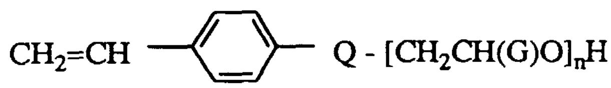

(II)

$$CH_2{=}C(R)\text{-}CONH\text{-}T\text{-}[OCH_2CH(G)]_nNH_2 \qquad (III)$$

where

G is hydrogen or methyl,
n is 2 to 20
T is alkylene of 2 to 4 carbon atoms, and
R is hydrogen or methyl,
Q is a direct bond or -O-,

(c) 20 to 1 % by weight, based on the total copolymer, of a quaternary ammonium monomer of formula IV, V, VI or VII or a mixture thereof

$$CH_2\text{-}C(R)\text{-}COO\text{-}L\text{-}N^+(E_1)(E_2)(E_3)\ X^- \qquad (IV)$$

$$CH_2{=}C(R)\text{-}COO\text{-}CH_2CH_2\text{-}NHCOO\text{-}L\text{-}N^+(E_1)(E_2)(E_3)\ X^- \qquad (V)$$

$$CH_2{=}C(R)CONHCH_2CH_2\text{-}N^+(E_1)(E_2)(E_3)\ X^- \qquad (VI)$$

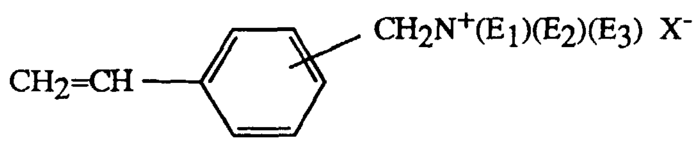

(VII)

where

R is hydrogen or methyl,
L is alkylene of 2 to 4 carbon atoms,
$E_1$, $E_2$ and $E_3$ are independently alkyl of 1 to 18 carbon atoms, or one of $E_1$, $E_2$ and $E_3$ is phenylalkyl of 7 to 9 carbon atoms, and the remaining two of $E_1$, $E_2$ and $E_3$ are independently alkyl of 1 to 18 carbon atoms, and
$X^-$ is halide,

(d) 5 to 0.1 % by weight, based on the total copolymer, of a crosslinking agent selected from the group consisting of allyl methacrylate, diallyl itaconate, monoallyl itaconate, diallyl maleate, diallyl fumarate, diallyl succinate, diallyl phthalate, trially cyanurate, tiallyl isocyanuate, diethylene glycol bisallyl carbonate, triallyl phosphate, triallyl trimellitate, diallyl ether, N,N-diallylmelamine, divinyl benzene, N,N'-methylene-bis-acrylamide, ethylene glycol dimethacrylate, neopentyl glycol dimethacrylate, tetraethylene glycol dimethacrylate, N,N'-hexamethylene-bis-maleimide, divinyl urea, bisphenol A dimethacrylate, divinyl adipate, glyceryl trimethacrylate, trimethylolpropane triacrylate, trivinyl mellitate, 1,3-bis(4-methacryloxybutyl) tetramethyl disiloxane, divinyl ether and divinyl sulfone.

Radicals and groups designated "lower", such as lower alkyl, etc., denote radicals and groups having up to 7 carbon atoms, preferably up to 4 carbon atoms. Examples of lower alkyl are e.g. hexyl, pentyl or butyl and preferably methyl, ethyl or propyl.

Radicals such as alkyl, alkylene or the like are unbranched or branched radicals of that kind. Examples are

e.g. n-propyl or 2-propyl; 1-butyl, 2-butyl or t-butyl; 1,2-propylene or 1,3-propylene; 1,2-butylene, 1,3-butylene or 1,4-butylene; etc..

When it is desired to prepare a copolymer having greater hardness and/or strength, such as would be desirable in a contact lens for increased handleability or durability, a fifth component (e) derived from a hydrophobic monomer should also be present. The hydrophobic monomer is selected from the group consisting of $C_1$ to $C_{18}$alkyl acrylates and methacrylates, $C_3$ to $C_{18}$acrylamides and methacrylamides, acrylonitrile, $C_5$-$C_{12}$cycloalkyl acrylates and methacrylates, methacrylonitrile, vinyl $C_1$ to $C_{18}$alkanoates, $C_2$ to $C_{18}$alkenes, $C_2$ to $C_{18}$haloalkenes, styrene, $C_1$ to $C_6$alkylstyrenes, vinyl alkyl ethers where the alkyl is 1 to 6 carbon atoms, $C_3$-$C_{12}$ perfluoroalkylethyl thiocarbonylaminoethyl acrylates and methacrylates, $C_3$-$C_{12}$fluoroalkyl acrylates and methacrylates, acryloxy and methacryloxy alkyl siloxanes, N-vinylcarbazole, $C_1$-$C_{12}$alkyl esters of maleic, fumaric, itaconic and mesaconic acid.

Examples of such hydrophobic monomers include methyl acrylate, ethyl acrylate, propyl acrylate, isopropyl acrylate, cyclohexyl acrylate, 2-ethylhexyl acrylate, methyl methacrylate, propyl methacrylate, vinyl acetate, vinyl propionate, vinyl butyrate, vinyl valerate, styrene, vinyl chloride, vinylidine chloride, acrylonitrile, 1-butene, methacrylonitrile, vinyl toluene, vinyl ethyl ether, perfluorohexylethylthiocarbonylaminoethyl methacrylate, isobornyl methacrylate, hexafluorobutyl methacrylate, 3-methacryloxypropylpentamethyldisiloxane and bis(methacryloxypropyl)tetramethyldisiloxane.

Preferable the hydrophobic monomer (e) is methyl methacrylate, styrene or vinyl acetate.

When T or L is alkylene of 2 to 4 carbon atoms, it is, for example, ethylene, trimethylene (1,3-propylene), propylene (1,2-propylene) or tetramethylene.

Preferably, the hydrophilic monomers of component (a) are 2-hydroxyethyl acrylate, 2-hydroxyethyl methacrylate, acrylamide, methacrylamide, N,N-dimethylacrylamide, allyl alcohol, 2- or 4-vinyl pyridine, N-vinyl-2-pyrrolidone, 2,3-dihydroxypropyl methacrylate or N-(1,1-dimethyl-3-oxobutyl)-acrylamide.

Most preferably, the hydrophilic monomer of component (a) is 2-hydroxyethyl methacrylate, N-vinyl-2-pyrrolidone, acrylamide or N,N-dimethylacrylamide.

Preferably, in the monomer of formula I of component (b)

G is hydrogen or methyl,
R is hydrogen or methyl,
n is 4 to 12, and
T is ethylene.

Most preferably, in the monomer of formula I of component (b)

G is hydrogen,
R is methyl,
n is 4 to 8, and
T is ethylene.

Preferably, in the monomer of formula IV, V, VI or VII of component (c)

R is hydrogen or methyl,
L is ethylene, trimethylene or propylene (1,3- or 1,2-propylene),
$E_1$, $E_2$ and $E_3$ are independently alkyl of 1 to 18 carbon atoms, and
$X^-$ is $Cl^-$ or $Br^-$.

Most preferably, in the monomer of formula IV, V, VI or VII of component (c)

R is methyl,
L is ethylene,
$E_1$ is alkyl of 1 to 18 carbon atoms,
$E_2$and $E_3$ are each methyl, and
$X^-$ is $Cl^-$.

Preferably, the crosslinking monomer of component (d) is ethylene glycol dimethacrylate, neopentyl glycol dimethacrylate, tetraethylene glycol dimethacrylate, glyceryl trimethacrylate or trimethylolpropane triacrylate.

Most preferably, the crosslinking monomer of component (d) is ethylene glycol dimethacrylate, neopentyl

glycol dimethacrylate or tetraethylene glycol dimethacrylate.

The monomers of components (a), (c) and (d) are largely items of commerce or can be easily made by conventional methods.

The monomers of component (b) are easily prepared by reacting hydroxyalkyl substituted monomers such as 2-hydroxyethyl methacrylate with ethylene oxide, propylene oxide or butylene oxide or by the methods described in U.S. Patent No. 4,038,264.

The copolymerization of the four monomers of components (a), (b), (c) and (d) may be carried out by using initiators which generate free radicals upon the application of activating energy (i.e. heat) as is conventionally used in the polymerization of ethylenically unsaturated monomers. Included among free-radical initiators are conventional thermally activated initiators such as organic peroxides, organic hydroperoxides and azo compounds. Representative examples of such initiators include benzoyl peroxide, tert-butyl perbenzoate, tert-butyl hydroperoxide, diisopropyl peroxydicarbonate, cumene hydroperoxide, 2,2'-azobis(isobutyronitrile) and 2,2'-azobis(2,4-dimethylvaleronitrile). Generally, from about 0.01 to 5 % by weight of the thermal initiator is used.

Preferably, for making contact lenses, UV-initiated polymerization is carried out using photoinitiators. Such initiators are well known. The preferred photoinitiators are those which facilitate polymerization when the monomer composition is irradiated in the contact lens mold. Representative examples of such photoinitiators include acyloin and derivatives thereof such as benzoin, benzoin methyl ether, benzoin ethyl ether, benzoin isopropyl ether, benzoin isobutyl ether and α-methylbenzoin; diketones such as benzil and diacetyl; ketones such as acetophenone, α,α,α-tribromoacetophenone, α,α-diethoxyacetophenone, 2-hydroxy-2-methylphenyl-1-propanone, o-nitro-α,α,α-tribromoacetophenone, benzophenone and p,p'-tetramethyldiaminobenzophenone; α-acyloxime esters such as benzil-(O-ethoxycarbonyl)-α-monoxime; ketone/amine combinations such as benzophenone/-N-methyldiethanolamine, benzophenone/tributylamine and benzophenone/Michler's ketone; and benzil ketals such benzil dimethyl ketal, benzil diethyl ketal and 2,5-dichlorobenzil dimethyl ketal. Normally, the photoiniitator is used in amounts ranging from about 0.01 to 5 % by weight of the total monomers; preferably about 0.1 to 1 % of photoinitiator is used.

Polymerization may be carried out in bulk in a conventional manner or in the presence of a solvent. Useful solvents include ketones, such as acetone, methyl ethyl ketone, methyl propyl ketone, methyl isobutyl ketone, methyl amyl ketone and cyclohexanone; alcohols such as methanol, ethanol, isopropanol or ethyl cellosolve; ethers such as ethylene glycol or diethylene glycol dimethyl ether; esters such as ethyl acetate or isopropyl acetate; dimethyl sulfoxide; N-methyl-2-pyrrolidone; N,N-dimethylformamide; N,N-dimethylacetamide; water and saline solution.

The polymerization is carried out in molds, which may consist of plastics, glass or metal and can be of any shape. For making films and sheets, the molds are preferably made of glass plates lined with MYLAR® (polyester film, DuPont) or other polymer films and held together by clamps, using a spacer of desired thickness. Contact lenses are preferably prepared in UV-permeable plastics molds.

After polymerization is complete, the polymer can be postheated and removed from the mold and any solvent present is either removed by vacuum drying or extraction with water and with water-soluble solvents, or water-solvent mixtures. Useful solvents are acetone, ethanol, methanol or isopropanol. Azeotropic distillation is also a useful procedure to remove certain solvents. After the solvent is removed, the polymer is equilibrated in distilled water and its water content is determined gravimetrically. All subsequent measurements are carried out on water-equilibrated polymers.

Oxygen permeability is measured with a DK 1000 (ATD Design) instrument using buffered saline (pH = 7) as electrolyte and is expressed in units seen below:

$$O_2DK\ (\text{barrers}) = \frac{cm^3(\text{STP})\ mm\ 10^{-10}}{cm^2\ sec\ mm\ Hg}$$

at a given thickness and temperature

Physical-mechanical measurements are carried out with an INSTRON® testing apparatus, model MT-100 on 0.05-0.1 mm thick sheets.

Water content is expressed as follows:

$$\%\ H_2O = \frac{\text{weight of swollen polymer - weight of dry polymer}}{\text{weight of swollen polymer}} \times 100$$

Examples 1-7

Contact Lenses

Using a transparent contact lens mold after purging with nitrogen, contact lenses are made from the following

comonomers with the amounts given in the table below: 2-hydroxyethyl methacrylate (HEMA); ω-hydroxy[tetra(ethyleneoxy)]ethyl methacrylate (Sipomer HEM-5); 2-(methacryloyloxy)ethyl-trimethylammonium chloride (MADQUAT Q6); ethylene glycol dimethacrylate (EGDMA) with 2-hydroxy-2-methyl-1-phenylpropan-1-one (DAROCUR® 1173, EM Industries) as photoinitiator using low intensity or high intensity actinic light. The amounts for each item in the table below are given in grams.

| Example | Sipomer HEMA | HEM-5 | MADQUAT | EGDMA | DAROCUR® 1173 | $H_2O$ | Cure Time hour |
|---|---|---|---|---|---|---|---|
| 1 | 68.8 | 15.0 | 15.0 | 1.0 | 0.2 | 15.0 | 4 |
| 2 | 78.8 | 10.0 | 10.0 | 1.0 | 0.2 | 10.0 | * |
| 3 | 78.7 | 10.0 | 10.0 | 1.1 | 0.2 | 10.0 | * |
| 4 | 79.2 | 10.0 | 10.0 | 0.5 | 0.4 | 10.0 | 1 |
| 5 | 79.1 | 10.0 | 10.0 | 0.5 | 0.4 | 10.0 | 2 |
| 6 | 79.3 | 10.0 | 10.0 | 0.5 | 0.2 | 10.0 | 2 |
| 7 | 79.3 | 10.0 | 10.0 | 0.5 | 0.2 | 10.0 | 4 |

*High intensity light is used with Examples 2 and 3 with the mold passing through the light at the rate of 14 inches/minute (35.56 cm/minute) for three feet.

The physical properties of the contact lenses made in these examples are shown in the table below.

| Example HEM-5 HEM-5 HEM-5 HEM-5 | CT* | Modulus* | Stress* | % Elong | Dk* | Flux*% | Water |
|---|---|---|---|---|---|---|---|
| 2 | 0.064 | 68 | 18.2 | 20 | 14.9 | 0.17 | 57 |
| 3 | 0.11 | 129 | 18.4 | 14 | 20.7 | 0.14 | 55 |
| 4 | 0.069 | 99 | 24 | 24 | 25.1 | 0.23 | 59 |
| 5 | 0.082 | 107 | 27 | 25 | 23 | 0.22 | - |
| 6 | 0.089 | 114 | 28 | 25 | - | - | - |
| 7 | 0.092 | 99 | 21 | 22 | - | - | - |

*CT is center thickness of the contact lens in mm.
Modulus and Stress values are in (dynes/$cm^2$) x $10^5$.
Dk value is oxygen permeability x $10^{-10}$ = $cm^3$ mm(STP)/$cm^2$ mm Hg Sec.
Flux is µl of oxygen/$cm^2$/minutes.

All of the contact lenses of Examples 1-7 are clear. The lenses of Examples 1, 4 and 5 have dry extractables of 2.4%, 2.6% and 2.5% respectively.

The contact lenses of Examples 2-3 are clinically acceptable for use on the eye.

Examples 8-12

Contact Lenses

Following the general procedure of Examples 1-7, contact lenses are made from the following comonomers with the amounts given in the table below: 2-hydroxyethyl methacrylate (HEMA); ω-hydroxy[tetra(ethyleneoxy)]ethyl methacrylate (Sipomer HEM-5);
2-(methacryloyloxy)ethyl-trimethylammonium chloride (MADQUAT Q6); ethylene glycol dimethacrylate (EGDMA) with benzoin methyl ether (BME) as photoinitiator. The amounts given in the table for the components are in grams.

| Example | Sipomer HEMA | HEM-5 | MADQUAT | EGDMA | BME | % Water in lens |
|---|---|---|---|---|---|---|
| 8 | 4.8 | 5.0 | 0.1 | 0.1 | 0.01 | 51 |
| 9 | 7.3 | 2.5 | 0.1 | 0.1 | 0.01 | 48 |
| 10 | 8.8 | 1.0 | 0.1 | 0.1 | 0.01 | 45 |
| 11 | 9.3 | 0.5 | 0.1 | 0.1 | 0.01 | 47 |
| 12 | 8.4 | 1.0 | 0.1 | 0.5 | 0.01 | 55 |

The contact lenses of Examples 11 and 12 are clear, that of Example 10 is very slightly opaque; that of Example 9 is slightly opaque while that of Example 8 is opaque. This shows that greatly increasing the amount of HEM-5 adversely affects clarity of the lenses.

Example 13

Protein Deposition on Contact Lenses

To ascertain whether contact lenses made from the instant copolymers are essentially resistant to protein deposition compared to prior art soft contact lenses, six contact lenses prepared from the copolymer of Example 3 and six contact lenses made from a prior art copolymer having essentially the same water content, but not having the structural units derived from instant components (b) and (c) are subjected to five cycles of a simulated use in an *in vitro* comparative test. The amount of protein deposited on the lenses at the end of the fifth cycle is measured using the standard ninhydrin color method for measuring amino acid or protein. Each of the six instant contact lenses and six control lenses is cycled five times through the following procedure:

a. The lens is soaked in a 1% lysozyme solution in borate buffered saline for at least 30 minutes at 35°C;
b. The lens is then disinfected by placing in contact with a dilute hydrogen peroxide solution for at least six hours;
c. The disinfected lens is removed from the disinfection solution and the cycle is started again;
d. At the end of the fifth cycle, the lens is lightly blotted dry, placed in a vial containing 200 ml of distilled water, and the total amount of protein deposited on the lens after the five cycles of the test procedure is measured by the ninhydrin protein assay method.

Two blank instant lenses and two blank prior art lenses as well as two blank instant lenses each spiked with 25 µg of lysozyme and two blank prior art lenses each spiked with 250 µg of lysozyme are run as controls to assess the recovery of protein from the lenses and to indicate the reliability of this test procedure.

The data of this test are included on the table below.

| Lens | µg Protein Deposited |
|---|---|
| Instant Copolymer of Example 3 | |
| Blank 1 | 2 |
| Blank 2 | 3 |
| Spiked* 3 | 21 |
| Spiked* 4 | 20 |
| Lens 1 | 13 |
| Lens 2 | 13 |
| Lens 3 | 3 |
| Lens 4 | 12 |
| Lens 5 | 29 |
| Lens 6 | 15 |
| Prior Art Lens | |
| Blank 7 | 8 |
| Blank 8 | 11 |
| Spiked** 9 | 219 |
| Spiked** 10 | 231 |
| Lens 11 | 518 |
| Lens 12 | 575 |
| Lens 13 | 589 |

*Spiked with 25 µg of lysozyme.

**Spiked with 250 µg of lysozyme.

(continued)

| Prior Art Lens | |
|---|---|
| Lens 14 | 584 |
| Lens 15 | 417 |
| Lens 16 | 527 |

An analysis of these data shows that the instant lenses have a median amount of 13 µg of protein deposited on them while the prior art lenses have a median amount of 551 µg of protein deposited on them. The prior art contact lenses have essentially 40 times as much protein deposited on them compared to the instant contact lenses. While there is some variation between individual lenses of each type, these data show a highly significant difference between the instant contact lenses and those of the prior art lenses. The instant contact lenses are essentially resistant to protein deposition compared to the prior art contact lenses.

Example 14

Protein Deposition on Contact Lenses

Two contact lenses prepared from the copolymer of Example 3 and two prior art contact lenses made from a copolymer of 2-hydroxyethyl methacrylate (HEMA) and N-vinylpyrrolidone (NVP), which do not contain any of instant components (b) and (c), are worn for six hours by four patients in the clinic. Each of the test lenses has about the same water content.

At the end of the wear period, the amount of deposited lysozyme is measured using the sodium dodecyl sulfate polyacrylamide gel electrophoresis (SDS-PAGE) method described by D. Hager, Analytical Biochemistry, 109, 76 (1980).

Each of the lenses is sliced into six sections and then placed into a 1.5 ml Eppendorf conical vial containing an extraction solution of 0.5 tris(hydroxymethyl)aminomethane, 2% by weight of sodium dodecyl sulfate, 10% by weight of glycerol and 5% by weight of dithiothreito (DTT) and having a pH of 9.52. The solution is heated at 95°C for one hour and then cooled to 35°C for 23 hours.

The lens slices are removed from the vial and 1 ml of cold acetone is added to the vial. The vial is stored at -20°C for twenty minutes and then centrifuged at 12,000 rpm fpr 10 minutes. The acetone supernatant is poured off and the precipitated protein is collected.

The extracted, isolated protein is then dissolved in a sodium dodecyl sulfate buffer sample and analyzed by the SDS-PAGE method.

The gel protein is characterized and identified using the improved Coomassie Brilliant Blue G-250 and R-250 analytical procedure described by V. Neuhoff, Electrophoresis 9 255 (1988). The results of the densitometer analysis are given in the table below.

| Contact Lenses | Lysozyme Protein Deposit Amount |
|---|---|
| prior art | 1.51 |
| Example 3 | 0.13 |

The amount of lysozyme protein deposited on the instant contact lenses of Example 3 is only about 10% of the amount of protein deposited on the prior art contact lenses which do not contain any of components (b) and (c) in their composition.

This is a clinically significant reduction in the protein deposition proclivity of the instant contact lenses compared to those of the prior art.

**Claims**

1. A copolymer, having good oxygen permeability, good antimicrobial properties and good resistance to proteinaceous deposition, which comprises the copolymerization product of

(a) 65 to 97.9 % by weight, based on the total copolymer, of a hydrophilic monomer selected from the group consisting of the hydroxy substituted $C_1$-$C_4$alkyl acrylates or methacrylates, acrylamide, methacrylamide, N-

$C_1$-$C_2$alkylacrylamide or methacrylamide, N,N-di-$C_1$-$C_2$alkylacrylamide or methacrylamide, ethoxylated acrylates or methacrylates, hydroxy substituted $C_1$-$C_4$alkyl acrylamide or methacrylamide, hydroxy substituted $C_1$-$C_4$alkyl vinyl ethers, sodium ethylenesulfonate, sodium styrenesulfonate, 2-acrylamido-2-methylpropanesulfonic acid, N-vinyl-2-pyrrolidone, N-vinylsuccinimide, N-vinylpyrrole, 2- and 4-vinylpyridine, acrylic acid, methacrylic acid, amino-, $C_1$-$C_4$alkylamino- or $C_1$-$C_4$dialkylamino- substituted $C_1$-$C_4$alkyl acrylates or methacrylates, allyl alcohol and mixtures thereof,

(b) 20 to 1 % by weight, based on the total copolymer, of a monomer of formula I, II or III

$$CH_2=C(R)\text{-}COO\text{-}T\text{-}[OCH_2CH(G)]_nOH \quad (I)$$

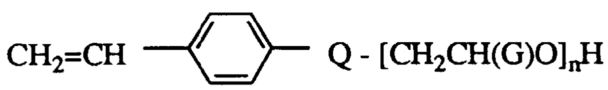

(II)

$$CH_2=C(R)\text{-}CONH\text{-}T\text{-}[OCH_2CH(G)]_nNH_2 \quad (III)$$

where

G is hydrogen or methyl,
n is 2 to 20
T is alkylene of 2 to 4 carbon atoms, and
R is hydrogen or methyl,
Q is a direct bond or -O-,

(c) 20 to 1 % by weight, based on the total copolymer, of a quaternary ammonium monomer of formula IV, V, VI or VII or a mixture thereof

$$CH_2=C(R)\text{-}COO\text{-}L\text{-}N^+(E_1)(E_2)(E_3)\ X^- \quad (IV)$$

$$CH_2=C(R)\text{-}COO\text{-}CH_2CH_2\text{-}NHCOO\text{-}L\text{-}N^+(E_1)(E_2)(E_3)\ X^- \quad (V)$$

$$CH_2=C(R)CONHCH_2CH_2\text{-}N^+(E_1)(E_2)(E_3)\ X^- \quad (VI)$$

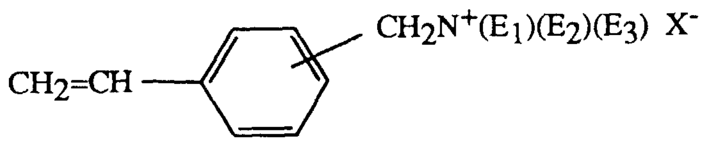

(VII)

where

R is hydrogen or methyl,
L is alkylene of 2 to 4 carbon atoms,
$E_1$, $E_2$ and $E_3$ are independently alkyl of 1 to 18 carbon atoms, or one of $E_1$, $E_2$ and $E_3$ is phenylalkyl of 7 to 9 carbon atoms, and the remaining two of $E_1$, $E_2$ and $E_3$ are independently alkyl of 1 to 18 carbon atoms, and
$X^-$ is halide,

(d) 5 to 0.1 % by weight, based on the total copolymer, of a crosslinking agent selected from the group consisting

of allyl methacrylate, diallyl itaconate, monoallyl itaconate, diallyl maleate, diallyl fumarate, diallyl succinate, diallyl phthalate, triallyl cyanurate, triallyl isocyanurate, diethylene glycol bisallyl carbonate, triallyl phosphate, triallyl trimellitate, diallyl ether, N,N-diallylmelamine, divinyl benzene, N,N'-methylene-bis-acrylamide, ethylene glycol dimethacrylate, neopentyl glycol dimethacrylate, tetraethylene glycol dimethacrylate, N,N'-hexamethylene-bis-maleimide, divinyl urea, bisphenol A dimethacrylate, divinyl adipate, glyceryl trimethacrylate, trimethylolpropane triacrylate, trivinylmellitate, 1,3-bis(4-methacryloxybutyl) tetramethyl disiloxane, divinyl ether and divinyl sulfone.

**2.** A copolymer according to claim 1 where the hydrophilic monomers of component (a) are 2-hydroxyethyl acrylate, 2-hydroxyethyl methacrylate, acrylamide, methacrylamide, N,N-dimethylacrylamide, allyl alcohol, 2- or 4-vinyl pyridine, N-vinyl-2-pyrrolidone, 2,3-dihydroxypropyl methacrylate or N-(1,1-dimethyl-3-oxobutyl)-acrylamide.

**3.** A copolymer according to claim 2 where the hydrophilic monomer of component (a) is 2-hydroxyethyl methacrylate, N-vinyl-2-pyrrolidone, acrylamide or N,N-dimethylacrylamide.

**4.** A copolymer according to claim 1 where in the monomer of formula I of component (b)

G is hydrogen or methyl,
R is hydrogen or methyl,
n is 4 to 12, and
T is ethylene.

**5.** A copolymer according to claim 4 where in the monomer of formula I of component (b)

G is hydrogen,
R is methyl,
n is 4 to 8, and
T is ethylene.

**6.** A copolymer according to claim 1 where in the monomer of formula IV, V, VI or VII of component (c)

R is hydrogen or methyl,
L is ethylene, trimethylene or propylene (1,3- or 1,2-propylene),
$E_1$, $E_2$ and $E_3$ are independently alkyl of 1 to 18 carbon atoms, and
$X^-$ is $Cl^-$ or $Br^-$.

**7.** A copolymer according to claim 6 where in the monomer of formula IV, V, VI or VII of component (c)

R is methyl,
L is ethylene,
$E_1$ is alkyl of 1 to 18 carbon atoms,
$E_2$ and $E_3$ are each methyl, and
$X^-$ is $Cl^-$.

**8.** A copolymer according to claim 1 where the crosslinking monomer of component (d) is ethylene glycol dimethacrylate, neopentyl glycol dimethacrylate, tetraethylene glycol dimethacrylate, glyceryl trimethacrylate or trimethylolpropane triacrylate.

**9.** A copolymer according to claim 8 where the crosslinking monomer of component (d) is ethylene glycol dimethacrylate, neopentyl glycol dimethacrylate or tetraethylene glycol dimethacrylate.

**10.** A copolymer according to claim 1 which additionally comprises the copolymerization product of component (e) of 0 to 20% by weight, based on the total copolymer, of a hydrophobic monomer selected from the group consisting of $C_1$ to $C_{18}$alkyl acrylates and methacrylates, $C_3$ to $C_{18}$acrylamides and methacrylamides, acrylonitrile, $C_5$-$C_{12}$cycloalkyl acrylates and methacrylates, methacrylonitrile, vinyl $C_1$ to $C_{18}$alkanoates, $C_2$ to $C_{18}$alkenes, $C_2$ to $C_{18}$haloalkenes, styrene, $C_1$ to $C_6$alkylstyrenes, vinyl alkyl ethers where the alkyl is 1 to 6 carbon atoms, $C_3$-$C_{12}$perfluoroalkylethyl thiocarbonylaminoethyl acrylates and methacrylates, $C_3$-$C_{12}$fluoroalkyl acrylates and methacrylates, acryloxy and methacryloxy alkyl siloxanes, N-vinylcarbazole and $C_1$-$C_{12}$alkyl esters of maleic, fumaric,

itaconic and mesaconic acid.

**11.** A copolymer according to claim 10 wherein component (e) is methyl methacrylate, styrene or vinyl acetate.

**12.** An ophthalmic acceptable device consisting of copolymer according to claim 1.

**13.** A device according to claim 12 which is a contact lens or an intraocular lens.

**14.** A device according to claim 13 which is a contact lens.

**Patentansprüche**

**1.** Copolymer mit guter Sauerstoffpermeabilität, guten antimikrobiellen Eigenschaften und guter Beständigkeit gegen proteinartige Ablagerung, das das Copolymerisationsprodukt von

(a) 65 bis 97,9 Gewichtsprozent, bezogen auf das gesamte Copolymer, eines hydrophilen Monomers, ausgewählt aus der Gruppe, bestehend aus den Hydroxy-substituierten $C_1$-$C_4$-Alkylacrylaten oder -methacrylaten, Acrylamid, Methacrylamid, N-$C_1$-$C_2$-Alkylacrylamid oder -methacrylamid, N,N-Di-$C_1$-$C_2$-alkylacrylamid oder -methacrylamid, ethoxylierten Acrylaten oder -methacrylaten, Hydroxy-substituiertem $C_1$-$C_4$-Alkylacrylamid oder -methacrylamid, Hydroxy-substituierten $C_1$-$C_4$-Alkylvinylethern, Natriumethylensulfonat, Natriumstyrolsulfonat, 2-Acrylamido-2-methylpropansulfonsäure, N-Vinyl-2-pyrrolidon, N-Vinylsuccinimid, N-Vinylpyrrol, 2- und 4-Vinylpyridin, Acrylsäure, Methacrylsäure, Amino-, $C_1$-$C_4$-Alkylamino- oder $C_1$-$C_4$-Dialkylamino-substituierten $C_1$-$C_4$-Alkylacrylaten oder -methacrylaten, Allylalkohol und Gemischen davon,
(b) 20 bis 1 Gewichtsprozent, bezogen auf das gesamte Copolymer, eines Monomers der Formel I, II oder III

$$CH_2{=}C(R)\text{-}COO\text{-}T\text{-}[OCH_2CH(G)]_nOH \qquad (I)$$

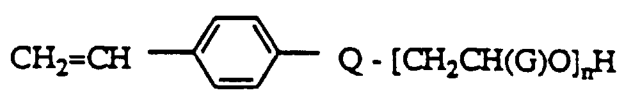

(II)

$$CH_2{=}C(R)\text{-}CONH\text{-}T\text{-}[OCH_2CH(G)]_nNH_2 \qquad (III)$$

worin

G Wasserstoff oder Methyl darstellt,
n 2 bis 20 ist,
T Alkylen mit 2 bis 4 Kohlenstoffatomen darstellt und
R Wasserstoff oder Methyl darstellt,
Q eine direkte Bindung oder -O- darstellt,

(c) 20 bis 1 Gewichtsprozent, bezogen auf das gesamte Copolymer, eines quaternären Ammoniummonomers der Formel IV, V, VI oder VII oder eines Gemisches davon

$$CH_2{=}C(R)\text{-}COO\text{-}L\text{-}N^+(E_1)(E_2)(E_3)\ X^- \qquad (IV)$$

$$CH_2{=}C(R)\text{-}COO\text{-}CH_2CH_2\text{-}NHCOO\text{-}L\text{-}N^+(E_1)(E_2)(E_3)\ X^- \qquad (V)$$

$$CH_2{=}C(R)CONHCH_2CH_2\text{-}N^+(E_1)(E_2)(E_3)\ X^- \qquad (VI)$$

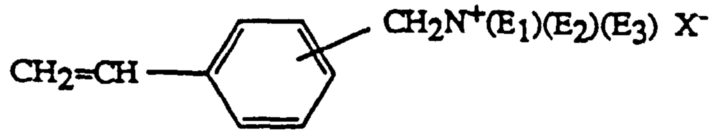

(VII)

worin

R Wasserstoff oder Methyl darstellt,
L Alkylen mit 2 bis 4 Kohlenstoffatomen darstellt,
$E_1$, $E_2$ und $E_3$ unabhängig voneinander Alkyl mit 1 bis 18 Kohlenstoffatomen darstellen, oder einer der Reste $E_1$, $E_2$ und $E_3$ Phenylalkyl mit 7 bis 9 Kohlenstoffatomen darstellt und die übrigen zwei Reste von $E_1$, $E_2$ und $E_3$ unabhängig voneinander Alkyl mit 1 bis 18 Kohlenstoffatomen darstellen und
$X^-$ Halogenid darstellt,

(d) 5 bis 0,1 Gewichtsprozent, bezogen auf das gesamte Copolymer, eines Vernetzungsmittels, ausgewählt aus der Gruppe, bestehend aus Allylmethacrylat, Diallylitaconat, Monoallylitaconat, Diallylmaleat, Diallylfumarat, Diallylsuccinat, Diallylphthalat, Triallylcyanurat, Triallylisocyanurat, Diethylenglycolbisallylcarbonat, Triallylphosphat, Triallyltrimellitat, Diallylether, N,N-Diallylmelamin, Divinylbenzol, N,N'-Methylenbisacrylamid, Ethylenglycoldimethacrylat, Neopentylglycoldimethacrylat, Tetraethylenglycoldimethacrylat, N,N'-Hexamethylenbismaleimid, Divinylharnstoff, Bisphenol-A-Dimethacrylat, Divinyladipat, Glyceryltrimethacrylat, Trimethylolpropantriacrylat, Trivinylmellitat, 1,3-Bis(4-methacryloxybutyl)tetramethyldisiloxan, Divinylether und Divinylsulfon, umfaßt.

**2.** Copolymer nach Anspruch 1, wobei die hydrophilen Monomere der Komponente (a) 2-Hydroxyethylacrylat, 2-Hydroxyethylmethacrylat, Acrylamid, Methacrylamid, N,N-Dimethylacrylamid, Allylalkohol, 2- oder 4-Vinylpyridin, N-Vinyl-2-pyrrolidon, 2,3-Dihydroxypropylmethacrylat oder N-(1,1-Dimethyl-3-oxobutyl)acrylamid darstellen.

**3.** Copolymer nach Anspruch 2, wobei das hydrophile Monomer von Komponente (a) 2-Hydroxyethylmethacrylat, N-Vinyl-2-pyrrolidon, Acrylamid oder N,N-Dimethylacrylamid darstellt.

**4.** Copolymer nach Anspruch 1, wobei in dem Monomer der Formel I von Komponente (b)

G Wasserstoff oder Methyl darstellt,
R Wasserstoff oder Methyl darstellt,
n 4 bis 12 ist und
T Ethylen darstellt.

**5.** Copolymer nach Anspruch 4, wobei in dem Monomer der Formel I von Komponente (b)

G Wasserstoff darstellt,
R Methyl darstellt,
n 4 bis 8 ist und
T Ethylen darstellt.

**6.** Copolymer nach Anspruch 1, wobei in dem Monomer der Formel IV, V, VI oder VII von Komponente (c)

R Wasserstoff oder Methyl darstellt,
L Ethylen, Trimethylen oder Propylen (1,3- oder 1,2-Propylen) darstellt,
$E_1$, $E_2$ und $E_3$ unabhängig Alkyl mit 1 bis 18 Kohlenstoffatomen darstellen und
$X^-$ $Cl^-$ oder $Br^-$ darstellen.

**7.** Copolymer nach Anspruch 6, wobei in dem Monomer der Formel IV, V, VI oder VII von Komponente (c)

R Methyl darstellt,
L Ethylen darstellt,

$E_1$ Alkyl mit 1 bis 18 Kohlenstoffatomen darstellt,
$E_2$ und $E_3$ jeweils Methyl darstellen und
$X^-$ $Cl^-$ darstellt.

**8.** Copolymer nach Anspruch 1, wobei das vernetzende Monomer von Komponente (d) Ethylenglycoldimethacrylat, Neopentylglycoldimethacrylat, Tetraethylenglycoldimethacrylat, Glyceryltrimethacrylat oder Trimethylolpropantriacrylat darstellt.

**9.** Copolymer nach Anspruch 8, wobei das vernetzende Monomer von Komponente (d) Ethylenglycoldimethacrylat, Neopentylglycoldimethacrylat oder Tetraethylenglycoldimethacrylat darstellt.

**10.** Copolymer nach Anspruch 1, das außerdem das Copolymerisationsprodukt von Komponente (e) von 0 bis 20 Gewichtsprozent, bezogen auf das gesamte Copolymer, eines hydrophoben Monomers, ausgewählt aus der Gruppe, bestehend aus $C_1$-$C_{18}$-Alkylacrylaten und -methacrylaten, $C_3$-$C_{18}$-Acrylamiden und -methacrylamiden, Acrylnitril, $C_5$-$C_{12}$-Cycloalkylacrylaten und -methacrylaten, Methacrylnitril, Vinyl-$C_1$-$C_{18}$-alkanoaten, $C_2$-$C_{18}$-Alkenen, $C_2$-$C_{18}$-Halogenalkenen, Styrol, $C_1$-$C_6$-Alkylstyrolen, Vinylalkylethern, worin Alkyl 1 bis 6 Kohlenstoffatome aufweist, $C_3$-$C_{12}$-Perfluoralkylethylthiocarbonylaminoethylacrylaten und -methacrylaten, $C_3$-$C_{12}$-Fluoralkylacrylaten und -methacrylaten, Acryloxy- und Methacryloxyalkylsiloxanen, N-Vinylcarbazol und $C_1$-$C_{12}$-Alkylestern von Malein-, Fumar-, Itacon- und Mesaconsäure, umfaßt.

**11.** Copolymer nach Anspruch 10, wobei Komponente (e) Methylmethacrylat, Styrol- oder Vinylacetat darstellt.

**12.** Ophthalmisch verträgliche Vorrichtung, bestehend aus einem Copolymer nach Anspruch 1.

**13.** Vorrichtung nach Anspruch 12, nämlich eine Kontaktlinse oder eine intraokulare Linse.

**14.** Vorrichtung nach Anspruch 13, nämlich eine Kontaktlinse.

## Revendications

**1.** Un copolymère ayant une bonne perméabilité à l'oxygène, de bonnes propriétés antimicrobiennes et une bonne résistance aux dépôts protéiniques, qui comprend le produit de copolymérisation de

(a) 65 à 97,9% en poids par rapport au poids total du copolymère, d'un monomère hydrophile choisi parmi le groupe comprenant les acrylates ou méthacrylates de $C_1$-$C_4$alkyle substitués par un groupe hydroxy, l'acrylamide, le méthacrylamide, l'acrylamide ou méthacrylamide de N-$C_1$-$C_2$alkyle, l'acrylamide ou méthacrylamide de N,N-di-$C_1$-$C_2$alkyle, les acrylates ou méthacrylates éthoxylés, l'acrylamide ou méthacrylamide de $C_1$-$C_4$alkyle substitué par un groupe hydroxy, les $C_1$-$C_4$alkylvinyléthers substitués par un groupe hydroxy, l'éthylènesulfonate de sodium, le styrènesulfonate de sodium, l'acide 2-acrylamido-2-méthylpropanesulfonique, la N-vinyl-2-pyrrolidone, le N-vinylsuccinimide, le N-vinylpyrrole, la 2- et 4-vinylpyridine, l'acide acrylique, l'acide méthacrylique, les acrylates ou méthacrylates de $C_1$-$C_4$alkyle substitués par un groupe amino, $C_1$-$C_4$alkylamino ou $C_1$-$C_4$dialkylamino, l'alcool allylique et un de ses mélanges,

(b) 20 à 1% en poids par rapport du poids total du copolymère, d'un monomère de formule I, II ou III

$$CH_2{=}C(R)\text{-}COO\text{-}T\text{-}[OCH_2CH(G)]_nOH \qquad (I)$$

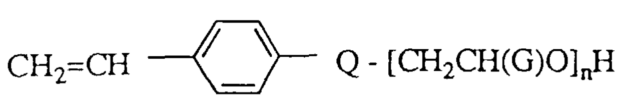

(II)

$$CH_2{=}C(R)\text{-}CONH\text{-}T\text{-}[OCH_2CH(G)]_nNH_2 \qquad (III)$$

où

G signifie l'hydrogène ou un groupe méthyle,
n signifie 2 à 20,
T signifie un groupe alkylène ayant de 2 à 4 atomes de carbone, et
R signifie l'hydrogène ou un groupe méthyle,
Q signifie une liaison directe ou -O-,

(c) 20 à 1% en poids par rapport au poids total du copolymère. d'un monomère d'ammonium quaternaire de formule IV, V, VI ou VII ou un de ses mélanges

$$CH_2=C(R)\text{-}COO\text{-}L\text{-}N^+(E_1)(E_2)(E_3)\ X^- \qquad (IV)$$

$$CH_2=C(R)\text{-}COO\text{-}CH_2CH_2\text{-}NHCOO\text{-}L\text{-}N^+(E_1)(E_2)(E_3)\ X^- \qquad (V)$$

$$CH_2=C(R)CONHCH_2CH_2\text{-}N^+(E_1)(E_2)(E_3)\ X^- \qquad (VI)$$

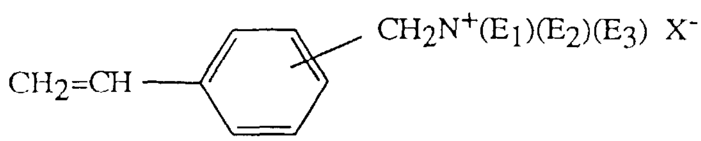

(VII)

où

R signifie l'hydrogène ou un groupe méthyle,
L signifie un groupe alkylène ayant de 2 à 4 atomes de carbone,
$E_1$, $E_2$ et $E_3$ signifient indépendamment un groupe alkyle ayant de 1 à 18 atomes de carbone ou bien l'un des symboles $E_1$, $E_2$ et $E_3$ signifie un groupe phénylalkyle ayant de 7 à 9 atomes de carbone et les deux autres symboles parmi $E_1$, $E_2$ et $E_3$ signifient indépendamment un groupe alkyle ayant de 1 à 18 atomes de carbone, et
$X^-$ signifie un halogénure,

(d) 5 à 0,1% en poids par rapport au poids total du copolymère d'un agent de réticulation choisi parmi le groupe comprenant le méthacrylate d'allyle, l'itaconate de diallyle, l'itaconate de monoallyle, le maléate de diallyle, le fumarate de diallyle, le succinate de diallyle, le phtalate de diallyle, le cyanurate de triallyle, l'isocyanurate de triallyle, le carbonate de bisallyle de diéthylèneglycol, le phosphate de triallyle, le triméllitate de triallyle, l'éther diallylique, la N,N-diallylmélamine, le divinylbenzène, le N,N'-méthylène-bis-acrylamide, le diméthacrylate d'éthylèneglycol, le diméthacrylate de néopentylglycol, le diméthacrylate de tétraéthylèneglycol, le N,N'-hexaméthylène-bis-maléimide, la divinylurée, le diméthacrylate de bisphénol A, l'adipate de divinyle, le triméthacrylate de glycéryle, le triacrylate de triméthylolpropane, le méllitate de trivinyle, le 1,3-bis(4-méthacryloxybutyl)tétraméthyldisiloxane, le divinyléther et la divinylsulfone.

**2.** Un copolymère selon la revendication 1 où les monomères hydrophiles du composant (a) sont l'acrylate de 2-hydroxyéthyle, le méthacrylate de 2-hydroxyéthyle, l'acrylamide, le méthacrylamide, le N,N-diméthylacrylamide, l'alcool allylique, la 2- ou 4-vinylpyridine, la N-vinyl-2-pyrrolidone, le méthacrylate de 2,3-dihydroxypropyle ou le N-(1,1-diméthyl-3-oxobutyl)-acrylamide.

**3.** Un copolymère selon la revendication 2, où le monomère hydrophile du composant (a) est le méthacrylate de 2-hydroxyéthyle, la N-vinyl-2-pyrrolidone, l'acrylamide ou le N,N-diméthylacrylamide.

**4.** Un copolymère selon la revendication 1, où, dans le monomère de formule I du composant (b)

G signifie l'hydrogène ou un groupe méthyle,
R signifie l'hydrogène ou un groupe méthyle,
n signifie de 4 à 12, et
T signifie un groupe éthylène.

**5.** Un copolymère selon la revendication 4, où, dans le monomère de formule I du composant (b)

G signifie l'hydrogène,
R signifie un groupe méthyle,
n signifie de 4 à 8, et
T signifie un groupe éthylène.

**6.** Un copolymère selon la revendication 1, où, dans le monomère de formule IV, V, VI ou VII du composant (c)

R signifie l'hydrogène ou un groupe méthyle,
L signifie un groupe éthylène, triméthylène ou propylène (1,3- ou 1,2-propylène),
$E_1$, $E_2$ et $E_3$ signifient indépendamment un groupe alkyle ayant de 1 à 18 atomes de carbone, et
$X^-$ signifie $Cl^-$ ou $Br^-$.

**7.** Un copolymère selon la revendication 6, où, dans le monomère de formule IV, V, VI ou VII du composant (c)

R signifie un groupe méthyle,
L signifie un groupe éthylène,
$E_1$, signifie un groupe alkyle ayant de 1 à 18 atomes de carbone,
$E_2$ et $E_3$ signifient chacun un groupe méthyle, et
$X^-$ signifie $Cl^-$.

**8.** Un copolymère selon la revendication 1, où le monomère de réticulation du composant (d) est le diméthacrylate d'éthylèneglycol, le diméthacrylate de néopentylglycol, le diméthacrylate de tétraéthylèneglycol, le triméthacrylate de glycéryle ou le triacrylate de triméthylolpropane.

**9.** Un copolymère selon la revendication 8, où le monomère de réticulation du composant (d) est le diméthacrylate d'éthylèneglycol, le diméthacrylate de néopentylglycol ou le diméthacrylate de tétraéthylèneglycol.

**10.** Un copolymère selon la revendication 1 qui comprend en outre le produit de copolymérisation du composant (e) de 0 à 20% en poids par rapport au poids total du copolymère, d'un monomère hydrophobe choisi parmi le groupe comprenant les acrylates et méthacrylates de $C_1$ à $C_{18}$alkyle, les $C_3$ à $C_{18}$acrylamides et méthacrylamides, l'acrylonitrile, les acrylates et méthacrylates de $C_5$-$C_{12}$cycloalkyle, le méthacrylonitrile, les $C_1$ à $C_{18}$alcanoates de vinyle, les $C_2$ à $C_{18}$alcènes, les $C_2$ à $C_{18}$haloalcènes, le styrène, les $C_1$ à $C_6$alkylstyrènes, les vinylalkyléthers où le groupe alkyle a de 1 à 6 atomes de carbone, les acrylates et méthacrylates de $C_3$-$C_{12}$perfluoroalkyléthyl-thiocarbonylaminoéthyle, les acrylates et méthacrylates de $C_1$-$C_{12}$fluoroalkyle, les acryloxy et méthacryloxyalkylsiloxanes, le N-vinylcarbazole et les esters $C_1$-$C_{12}$alkyliques de l'acide maléique, fumarique, itaconique et mésaconique.

**11.** Un copolymère selon la revendication 10 où le composant (e) est le méthacrylate de méthyle, le styrène ou l'acétate de vinyle.

**12.** Un dispositif acceptable du point de vue ophtalmique constitué d'un copolymère selon la revendication 1.

**13.** Un dispositif selon la revendication 12, qui est une lentille de contact ou une lentille intraoculaire.

**14.** Un dispositif selon la revendication 13 qui est une lentille de contact.